# EUROPEAN PATENT APPLICATION

(11) **EP 2 746 980 A1**
(43) Date of publication of application: **25.06.2014**
(21) Application number: 13160588.3
(22) Date of filing: 22.03.2013
(51) Int. Cl.: G06F 21/34

(54) **Automated human interface device operation method**

(30) Priority: 19.12.2012 TW 101148301
(71) Applicant: Walton Advanced Engineering Inc., Kaohsiung City 80681 (TW)
(72) Inventor: Yu, Hong-Chi, 80681 Kaohsiung City (TW); Chang, Mao-Ting, 80681 Kaohsiung City (TW)
(74) Representative: Chaillot, Geneviève

(57) **Abstract**

The present invention provides an automated human interface device operation method electrically activated in one computer in which Mac OS X v10.4 or a higher version is installed, makes a browser program automatically executed by the computer without manual intervention, fetch/enter a specific Uniform Resource Locator for login, and is automatically unloaded with all steps completed.

## Description

### BACKGROUND OF THE INVENTION

### 1) FIELD OF THE INVENTION

The present invention relates to an automated human interface device operation method, particularly an automated human interface device operation method adapted for one USB2.0 or USB3.0 flash disc.

### 2) DESCRIPTION OF THE PRIOR ART

The Internet era has accelerated not only information sharing but also popularity and progress of information technology. For example, computers as well as communications and consumer electronics have been extensively incorporated into human lives.

As common tools in a daily life, computers or electronics such as mobile phone have been universally used in miscellaneous areas with respect to food, cloth, dwelling, transportation, education or entertainment by individuals, families, companies or the government via the Internet.

For instance, Internet-based communication or exhibition platforms include web sites, blogs or online sales (shopping or auction) for merchandise or service. Other examples of emerging Internet-based platforms these days are Internet banking, online game, virtual currency/point transaction, and official electronic certificate service system in which people can deal with official business such as paying income tax, maintaining personal information (e.g., seniority), etc.

During communication or transactions on those platforms, money, benefits, or personal secret information (e.g., username and password), all of which are valuable digital information, need to be exchanged indispensably but caught by unworthy people possibly. In general, these unworthy people depend on various illegal means, for instance, video recording, Trojan Horses, hacking, phishing site, or malicious software to catch, sell or illegally use people's digital information.

The workers specializing in information security have been devoting themselves to preventing clients' critical information to be transmitted via the Internet from attack or steal but their precautions are limited to some specific attacks only rather than unworthy people's all malicious attacks.

Additionally, a compact USB flash disc which is freely removed or attached has become a major tool to access and transmit information but still is not thoroughly considered in Internet security or Internet marketing.

Against this background, it is necessary to provide a good mechanism which considers the issues with respect to Internet security and Internet marketing for Internet amateurs expecting safe Internet environment.

### SUMMARY OF THE INVENTION

To settle the above problems, the present invention provides an automated human interface device operation method, particularly an automated human interface device operation method used in one USB2.0 or USB3.0 flash disc. In the present invention electrically activated in the computer by a user, a browser program is automatically executed by one computer in which Mac OS X v10.4 or a higher version is installed without manual intervention and followed by another step to enter a specific Uniform Resource Locator or login it. Then, the Human Interface Device (HID) can be unloaded, as is the computer's follow-up operation to detect it, when automatic connection is completed and communication between the HID and the computer is interrupted.

The object of the present invention is to prevent a user's digital data or personal information from any other third party's steal by malicious methods but realize true digital information safety and network security.

The other object of the present invention is to provide an automated navigation method for operation of a flash disc in which a user needs not to remember specific login-related information (e.g., username and password) or a Uniform Resource Locator or to worry about any login-related information forgotten or lost but browses real-time content of the specific Uniform Resource Locator, enjoying the Internet by activating a specific browser.

The further object of the present invention is to provide an automated navigation method for operation of a flash disc in which a user needs not to remember specific login-related information (e.g., username and password) or a Uniform Resource Locator but browses real-time content of the specific Uniform Resource Locator and freely proceeds with his/her Internet behavior which is of service to a vendor's Internet marketing.

The yet other object of the present invention is to provide an automated navigation method for operation of a flash disc in which the HID is unloaded, as is the computer's follow-up operation to detect it, in order to prevent a computer user from a distracting pop-up dialog box such as 'Keyboard Setup Assistant' shown on a terminal of the computer having detected the HID and minimize waste of system resources when automatic connection is completed and communication between the HID and the computer is interrupted.

The present invention is based on the following major technical measures to realize the above purposes.

The present invention of an automated human interface device operation method is adapted for Mac OS X v10.4 or a higher version and comprises steps as follows: (a) Step 1: a plurality of metal contacts on an integrated circuit module is electrically connected to a computer's USB port; (b) Step 2: the integrated circuit module is identified by the computer; (c) Step 3: a human interface device module of a control element in the integrated circuit module responds to the computer for connection of a Human Interface Device; (d) Step 4: a command to activate the 'Command' key and the 'Space Bar' key (or activate the 'Ctrl' key and the 'Space Bar' key) is issued by an automatic typing module in order to create and activate a pop-up search dialog box; (e) Step 5: a command to enter a string of 'type:Safari.app' and activate the "Enter" key is issued by the automatic typing module via the search dialog box; (f) Step 6: a specific browser is enabled by the computer; (g) Step 7: a command to activate the 'Command' key and the 'L' key is issued by the automatic typing module in order to make a URL (Uniform Resource Locator) line on the specific browser active; (h) Step 8: a command to enter a string for a specific Uniform Resource Locator in the URL line and activate the 'Enter' key is issued by the automatic typing module for connection to a home page with respect to the specific Uniform Resource Locator; (i) Step 9: the integrated circuit module steps down the DP (D+) voltage to make the integrated circuit module unloaded.

The present invention is further based on the following technical measures to realize the above purposes.

In the above automated navigation method for operation of a flash disc, a command to activate the extra 'full/half-width alphanumerical' key for a Japanese keyboard is issued by the automatic typing module of the control element before or after Step 4.

In the above automated navigation method for operation of a flash disc, a command to enter a first specific data string is issued by the automatic typing module when an EditText field on the home page is active after Step 8.

In the above automated navigation method for operation of a flash disc, a command to activate at least the 'Tab' key and enter a second specific data string is issued by the automatic typing module.

In the above automated navigation method for operation of a flash disc, a command to activate the 'Command' key, the 'P' key and the 'Enter' key is issued by the automatic typing module after Step 8 for printout of the home page.

In the above automated navigation method for operation of a flash disc, the integrated circuit module comprises a male connector, which is compatible to such a USB (Universal Series Bus) data transmission interface as a female connector port on the computer has, and is electrically connected to the female connector port via the metal contacts.

In contrast to the prior art, the present invention has effects as follows: (1) a browser program is automatically executed by the computer in which Mac OS X v10.4 or a higher version is installed without manual intervention and followed by another step to automatically fetch and enter a specific Uniform Resource Locator or login it when the present invention is electrically activated in the computer; (2) the present invention is automatically unloaded with all steps completed.

Therefore, the present invention realizes the following purposes: (1) a user's digital data or personal information is not seized by any other third party by malicious attack but truly protected under network security; (2) a user needs not to remember specific login-related information (e.g., username and password) or a Uniform Resource Locator or to worry about any login-related information forgotten or lost but browses real-time content of the specific Uniform Resource Locator, enjoying the Internet by activating a specific browser; (3) a user needs not to remember specific login-related information (e.g., username and password) or a Uniform Resource Locator but browses real-time content of the specific Uniform Resource Locator and freely proceeds with his/her Internet behavior which is of service to a vendor's Internet marketing; (4) the present invention is automatically unloaded, as is a computer's follow-up detective operation, with specific steps completed, preventing a computer user from a distracting pop-up dialog box such as 'Keyboard Setup Assistant' shown on a terminal of the computer having detected the present invention, and minimizing waste of system resources.

### BRIEF DESCRIPTIONS OF THE DRAWINGS

FIG. 1 is a sectional view of an integrated circuit module in the present invention of an automated human interface device operation method in a preferred embodiment.
FIG. 2 is a sectional view of an integrated circuit module which is electrically connected to a computer's USB port in the present invention of an automated human interface device operation method in a preferred embodiment.
FIG. 3 is a block diagram for the present invention of an automated human interface device operation method in a preferred embodiment.
FIG. 4 is a flowchart for the present invention of an automated human interface device operation method in a preferred embodiment.

### DETAILED DESCRIPTIONS OF THE PREFERRED

### EMBODIMENTS

The preferred embodiment of the present invention is particularly disclosed hereinafter to make purposes, features and effects further understood.

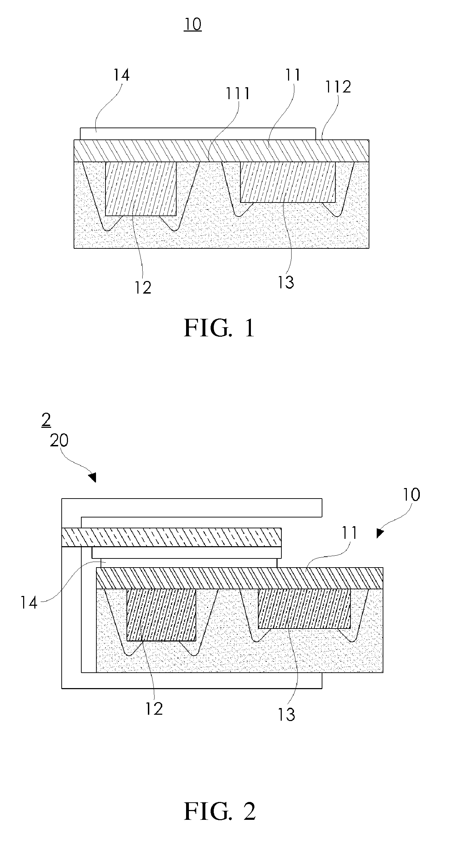

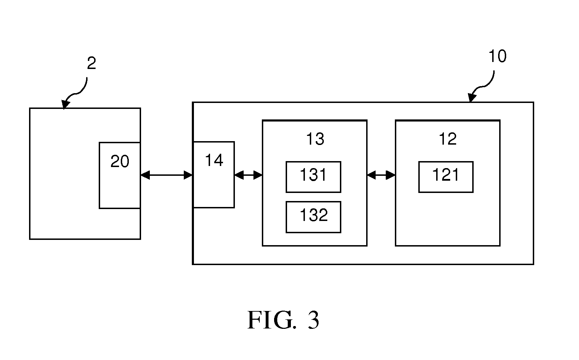

FIG. 1 through FIG. 4 exemplify the preferred embodiment in the present invention of an automated human interface device operation method which is adapted for Mac OS X v10.4 or a higher version. Referring to FIG. 1 through FIG. 3 which illustrate the present invention comprises an integrated circuit module (10) in which there are a substrate (11), at least a memory chip (12), at least a control element (13) and a plurality of metal contacts (14): the memory chip (12) and the control element (13) are mounted on an inner surface (111) of the substrate (11); the metal contact (14) are designed on an outer surface (112) of the substrate (11); the memory chip (12), the control element (13) and the metal contacts (14) are electrically connected to one another by means of electric circuits on the substrate (11).

Preferably, the integrated circuit module (10) comprises a male connector compatible to a USB (Universal Series Bus) data transmission interface; the metal contacts (14) are electrically connected to a female connector port (20) compatible to a USB data transmission interface on a computer (2).

In addition, the memory chip (12) which features supply of readable/writable digital data is used in storage of a plurality of entered data (121) in the preferred embodiment wherein the entered data (121) can be a command to activate the 'Command' key and the 'Space Bar' key, a command to activate the 'Ctrl' key and the 'Space Bar' key, a command to enter a string of 'type:Safari.app' and activate the 'Enter' key, a command to activate the 'Command' key and the 'L' key, a command to enter a specific string for a Uniform Resource Locator (URL) and activate the 'Enter' key, a command to enter a first specific data string, a command to activate at least the 'Tab' key and enter a second specific data string, or a command to activate the 'Command' key, the 'P' key, and the 'Enter' key.

Furthermore, the control element (13) electrically connected between the memory chip (12) and the metal contacts (14) is used to execute a command as well as control data import/export and comprises a human interface device module (131) as well as an automatic typing module (132) which can access each of the entered data (121) saved in the memory chip (12) in order to decide a command and control data import/export.

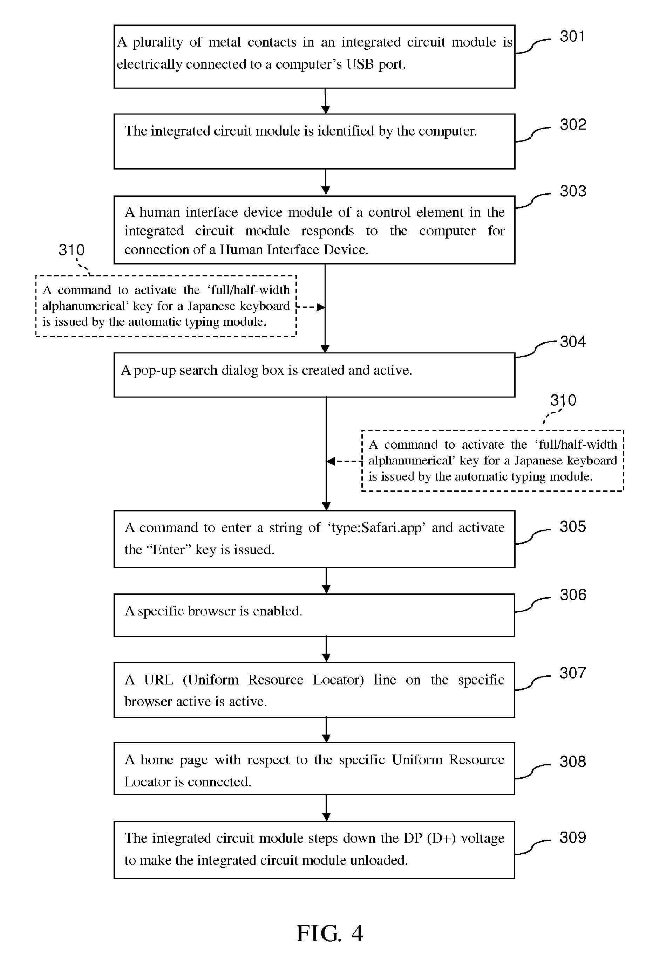

Referring to FIG. 4. Depending on a specific language, letters shown on a MAC computer's keyboard (i.e., Human Interface Device (HID)) may occupy positions different from those of another language letters, that is, the layout of letters or symbols on a keyboard may be distinct, as is a keycode corresponding to a letter (letters) or a symbol (symbols) in a different language. As such, the human interface device module (131) should refer to relationships between letters (or symbols) and keycodes predefined on a keyboard for one specific language.

In addition, the steps executed in the present invention are described by but not limited to the USB 2.0 standards instituted in the USB Implementers Forum (USB-IF).

In a word, a USB 2.0 data transmission interface is provided with four metal contacts (14), that is, Ground, VCC, and differential signals (DP (D+) and DM (D-) for transmission of signals).

The integrated circuit module (10) will boost the DP (D+) voltage and keep both DP and DM remain at a 'J' state when the plurality of metal contacts (14) on the integrated circuit module (10) in the present invention are electrically connected to the USB port (20) on the computer (2) (Step 1: 301). The integrated circuit module (10) is identified by the computer (2) which has detected the 'J' state in order to recognize the model of a connected device (Step 2: 302). Then, the human interface device module (131) of the control element (13) in the integrated circuit module (10) responds to the computer (2) for connection of a Human Interface Device (HID) (Step 3: 303). In the embodiment, the human interface device module (131) can be a virtual keyboard.

The rule for transmission of differential signals (DP (D+) and DM (D-)), as described in standards for data transmitted via a USB 2.0 interface, is not specified herein except a method to operate the present invention.

A command to activate the 'Command' key and the 'Space Bar' key (or activate the 'Ctrl' key and the 'Space Bar' key) is issued by the automatic typing module (132) of the control element (13) in order to create and activate a pop-up search dialog box when the integrated circuit module (10) is identified as a human interface device by the computer (2) (Step 4: 304). A command to enter a string of 'type:Safari.app' and activate the "Enter" key is issued by the automatic typing module (132) via the search dialog box (Step 5: 305). A specific browser is enabled by the computer (Step 6: 306), for example, the Safari browser in this embodiment. A command to activate the 'Command' key and the 'L' key is issued by the automatic typing module (132) in order to make a URL (Uniform Resource Locator) line on the specific browser active (Step 7: 307); preferably, a command to activate both the 'Command' key and the 'L' key twice or more is issued by the automatic typing module (132) for the URL line active. Then, a command to enter a string for a specific Uniform Resource Locator in the URL line and activate the 'Enter' key is issued by the automatic typing module (132) for connection to a home page with respect to the specific Uniform Resource Locator (Step 8: 308). The integrated circuit module (10) steps down the DP (D+) voltage to make the integrated circuit module unloaded after Step 8 (Step 9: 309), preventing a computer user from a distracting pop-up dialog box such as 'Keyboard Setup Assistant' on the computer terminal, and minimizing waste of system resources.

Furthermore, a command to activate the extra 'full/half-width alphanumerical' key for a Japanese keyboard is issued by the automatic typing module of the control element before or after Step 4 (310).

Preferably, an EditText field is active on the home page for execution of a command to enter a first specific data string, activate at least the 'Tab' key, and finally enter a second specific data string issued by the automatic typing module (132) after Step 8. In detail, the first specific data string and the second specific data string entered in EditText fields can be a username and a password, respectively.

Otherwise, a command to activate the 'Command' key, the 'P' key and the 'Enter' key is issued by the automatic typing module (132) for printout of the home page after Step 8.

It can be seen from the preferred embodiment herein that the present invention provides an automated human interface device operation method, particularly an automated human interface device operation method adapted for one USB2.0/USB3.0 flash disc. In the present invention, the browser program is automatically executed by one computer in which Mac OS X v10.4 or a higher version is installed without manual intervention and followed by another step to enter a specific Uniform Resource Locator or login it when the present invention is electrically activated in the computer. The present invention can be automatically unloaded, as is the computer's follow-up detective operation, when automatic connection is completed.

The present invention which is able to automatically login a specific home page without manual intervention such as entering any information has the following features: (1) a user's digital data or personal information is not seized by any other third party by malicious attacks but truly protected under network security; (2) a user needs not to remember specific login-related information (e.g., username and password) or a Uniform Resource Locator or to worry about any login-related information forgotten or lost but browses real-time content of the specific Uniform Resource Locator, enjoying the Internet by activating a specific browser; (3) a user needs not to remember specific login-related information (e.g., username and password) or a Uniform Resource Locator but browses real-time content of the specific Uniform Resource Locator and freely proceeds with his/her Internet behavior which is of service to a vendor's Internet marketing; (4) the present invention can be automatically unloaded, as is a computer's follow-up detective operation, with specific steps completed, preventing a computer user from a distracting pop-up dialog box such as 'Keyboard Setup Assistant' shown on a terminal of the computer having detected the integrated circuit, and minimizing waste of system resources.

Accordingly, the present invention with effects different from an ordinary human interface device and referred to as creative work among similar products meets patentability and is applied for the patent.

It must be reiterated that the above descriptions presents a preferred embodiment of the present invention only, and any equivalent change in specifications, claims, or drawings of the present invention still belongs to the technical field within the present invention with reference to claims hereinafter.

## Claims

1. An automated human interface device operation method which is adapted for Mac OS X v10.4 or a higher version and comprises steps as follows:
step 1: a plurality of metal contacts in an integrated circuit module is electrically connected to a computer's USB port (301);
step 2: the integrated circuit module is identified by the computer (302);
step 3: a human interface device module of a control element in the integrated circuit module responds to the computer for connection of a Human Interface Device (303);
step 4: a command to activate the 'Command' key and the 'Space Bar' key (or activate the 'Ctrl' key and the 'Space Bar' key) is issued by a automatic typing module in order to create and activate a pop-up search dialog box (304);
step 5: a command to enter a string of 'type:Safari.app' and activate the "Enter" key is issued by the automatic typing module via the search dialog box (305);
step 6: a specific browser is enabled by the computer (306);
step 7: a command to activate the 'Command' key and the 'L' key is issued by the automatic typing module in order to make a URL (Uniform Resource Locator) line on the specific browser active (307);
step 8: a command to enter a string for a specific Uniform Resource Locator in the URL line and activate the 'Enter' key is issued by the automatic typing module for connection to a home page with respect to the specific Uniform Resource Locator (308); and
step 9: the integrated circuit module (10) steps down the DP (D+) voltage to make the integrated circuit module unloaded (309).

2. An automated navigation method for operation of a flash disc according to Claim 1 wherein the automatic typing module of the control element issues one command to activate the extra 'full/half-width alphanumerical' key for a Japanese keyboard before or after Step 4 (310).

3. The automated navigation method for operation of a flash disc according to Claim 1 wherein the automatic typing module issues one command to enter a first specific data string when an EditText field on the home page is active after Step 8.

4. The automated navigation method for operation of a flash disc according to Claim 3 wherein the automatic typing module issues one command to activate at least the 'Tab' key and enter a second specific data string.

5. The automated navigation method for operation of a flash disc according to Claim 1 wherein the automatic typing module issues one command to activate the 'Command' key, the 'P' key, and the 'Enter' key after Step 8 for printout of the home page.

6. The automated navigation method for operation of a flash disc according to Claim 1 wherein the integrated circuit module comprises a male connector, which is compatible to such a USB (Universal Series Bus) data transmission interface as a female connector port on the computer has, and is electrically connected to the female connector port via the metal contacts.
